# EUROPÄISCHE PATENTANMELDUNG

(11) **EP 0 582 042 A1**
(43) Veröffentlichungstag der Anmeldung: **09.02.1994**
(21) Anmeldenummer: 93107033.8
(22) Anmeldetag: 30.04.1993
(51) Int. Cl.: D21C 9/00, D21B 1/32

(54) **Verfahren zur Veränderung der Eigenschaften, insbesondere der Faserfraktion von deinkten Altpapierstoffen und Maschinensatz zur Durchführung dieses Verfahrens**

(30) Priorität: 23.07.1992 DE 4224369
(71) Anmelder: J.M. Voith GmbH, D-89522 Heidenheim (DE)
(72) Erfinder: Ortner, Herbert, W-7920 Heidenheim (DE); Fischer, Siegbert, W-7920 Heidenheim (DE); Veh, Gerhard, W-8884 Höchstädt (DE)
(74) Vertreter: Weitzel, Wolfgang, Dr.-Ing. Patentanwalt

(57) **Zusammenfassung**

Die Erfindung betrifft ein Verfahren zur Herstellung von Papiergrundstoff für hochwertige Druckpapiere aus deinktem Altpapierstoff. Gemäß der Erfindung wird das Altpapier zunächst aufgelöst, gereinigt, flotiert und gebleicht wird und die Fasern des so gewonnenen deinkten Altpapierstoffes durch geeignete Mittel zerkleinert, so daß sich die Faserlängenverteilung derjenigen eines neu hergestellten Papierstoffes angleicht.

In einer weiteren Ausführungsform ist die Erfindung dadurch gekennzeichnet, daß das Altpapier zunächst aufgelöst, gereinigt, flotiert und gebleicht wird und der so gewonnene deinkte Altpapierstoff im ersten Schritt durch geeignete Mittel in mindestens zwei Faserfraktionen aufgeteilt wird, die sich durch die mittlere Länge ihrer Fasern unterscheiden; danach wird mindestens eine der Faserfraktionen durch geeignete Mittel derart behandelt, daß sich die mittlere Länge der Fasern dieser Fraktion signifikant reduziert; nachfolgend werden mindestens zwei Faserfraktionen wieder zusammengeführt, so daß eine Suspension mit einer Faserlängenverteilung gebildet ist, die der eines neu hergestellten Papierstoffes entspricht.

## Beschreibung

Die Erfindung betrifft ein Verfahren zur Veränderung der Eigenschaften, insbesondere der Faserfraktion, von deinkten Altpapierstoffen (Deinkingstoff) und einen Maschinensatz zur Durchführung dieses Verfahrens.

Der Oberbegriff aus Anspruch 1 ist aus "Wochenblatt für Papierfabrikation" Nr. 19 (1989) Seite 855 bis 862 bekannt. Es wird hierbei ein Verfahren zur Gewinnung von Faserstoffsuspension mit verbessertem Reinheitsgrad aus gemischtem Altpapier durch Auflösen, Reinigen, Flotieren, Bleichen mit und ohne Dispergierung und Waschen oder erneuter Flotation dargelegt, wobei die aufgelösten Einzelfasern in eine langfaserige und kurzfaserige Fraktion getrennt werden. Hierdurch werden sie den folgenden Arbeitsgängen leichter zugänglich gemacht und die Effektivität der Reinigungsapparate kann besser genutzt werden. Mit solch einem Verfahren läßt sich aus gemischtem Altpapier eine Faserstoffsuspension mit relativ hohem Weiß- und Reinheitsgrad gewinnen. Dies kann dann als Zusatz zu superkalandrierten Druckpapieren oder Streichrohpapieren zugeführt werden.

Bei der Herstellung von hochwertigen superkalandrierten Druckpapieren, aber auch bei Streichrohpapieren mit diesem Zusatz von deinktem Altpapier als Faserstoffkomponente, zeigt es sich jedoch, daß der Druckausfall schlechter ist als bei einem ohne Zusatz von deinktem Altpapier gefertigen Standard-Druckpapier vergleichbarer Qualität. Der schlechtere Druckausfall zeigt sich insbesondere durch eine Zunahme der sogenannten "missing dots" im Bereich der Halb- und Vierteltöne beim DIP-haltigen Papier, d.h., daß insbesondere bei Halb- und Vierteltönen die Bedruckbarkeit des DIP-haltigen Papiers im Vergleich zum Standardpapier zurückfällt.

Der Erfindung liegt die Aufgabe zugrunde ein Verfahren zu entwickeln, deinkten Altpapierstoff derart aufzubereiten, daß er ohne Qualitätseinbuße beim Druck insbesondere im Bereich der Halb- und Vierteltöne dem Standardgesamtstoff in signifikantem Maße zugesetzt werden kann bzw. den frischen Standardgesamtstoff gänzlich ersetzen kann.

Diese Aufgabe wird durch die kennzeichnenden Merkmale des Verfahrensanspruches 1 gelöst.

Eine Untersuchung der jeweiligen Faserstoffkomponenten zeigt, daß der z.B. aus 50 % Tageszeitung und 50 % illustrierten Zeitschriften gewonnene Deinkingstoff in seiner Faserstoff-Fraktion wesentlich "röscher" ist als z.B. der Gesamtstoff des Standard-SC-Papiers.

Die Erfinder haben erkannt, daß aufgrund der sehr hohen technologischen Festigkeitseigenschaften des Deinkingstoffes dieser sowohl einen Teil der Holzstoff- als auch der Zellstoffkomponente des Standard-Gesamtstoffes ersetzen kann, wenn die Faserfraktionen des Deinkingstoffes dem des Standard-Gesamtstoffes einander angeglichen werden.

Der Deinkingstoff muß folglich so aufbereitet werden, daß er dem Charakter des Standard-Gesamtstoffes entspricht. Dadurch kann er in jedem Verhältnis dem Standard-Gesamtstoff (bis zu 100 % - unter der Voraussetzung, er ist ausreichend sauber) zugesetzt werden.

Dieses ist jedoch nur möglich, wenn bei der Aufbereitung des Deinkingstoffes aus der Langfaserkomponente mit ein schleimiger Feinstoff erzeugt wird, der dem des Standard-Gesamtstoffes entspricht.

Tabelle I zeigt typische Ergebnisse der beiden z.B. nach Bauer-McNett gemessenen Faserfraktionen.

**Tabelle I**

| | | Standard-Gesamtstoff | Deinking-Stoff |
|---|---|---|---|
| R | 30 | 28 | 34 |
| R | 50 | 13 | 18 |
| R | 100 | 13 | 13 |
| R | 200 | 9 | 8 |
| D | 200 | 37 | 27 |
| Mahlgrad °SR | | 76 | 63 |

Es muß also das Ziel sein, den Deinkingstoff so nachzubehandeln, daß das Faserstoffspektrum dem des Standard-Gesamtstoffes angeglichen wird.

Wichtig ist hierbei, daß durch die Behandlung des Deinkingstoffes durch Mahlung aus der Langfaser ein hoher Anteil Schleimstoff entsteht, der die Herstellung von SC-Papieren ermöglicht. Hierzu bieten sich 3 Verfahren an:
1. Mahlung des Deinkingstoffes im Vollstrom
2. Mahlung des Deinkingstoffes im Vollstrom und anschließender Fraktionierung.
   Dadurch wird ein schleimiger Feinstoff vorwiegend aus den Langfasern erzeugt. Die Mahlung wird jedoch nicht soweit wie in dem 1. Fall geführt. Die überflüssige Langfaserkomponente wird durch Fraktionierung entfernt und kann z.B. zur Herstellung von Zeitungsdruck Verwendung finden.
3. Der Deinkingstoff wird fraktioniert, die Langfaserkomponente wird gemahlen und anschließend wieder mit der Kurzfaserkomponente gemischt. Hierbei wird die Mahlung der Langfaserkomponente so geführt, daß auch ein schleimiger Feinstoff entsteht.
4. Der Deinkingstoff wird fraktioniert, die Kurzfaserkomponente wird dem Herstellungsprozeß hochwertiger Papiere zugeführt während die Langfaserkomponente zur Herstellung minderwertigerer Papiere genutzt wird, wobei diese nochmals einer weiteren Mahlung unterzogen werden kann.

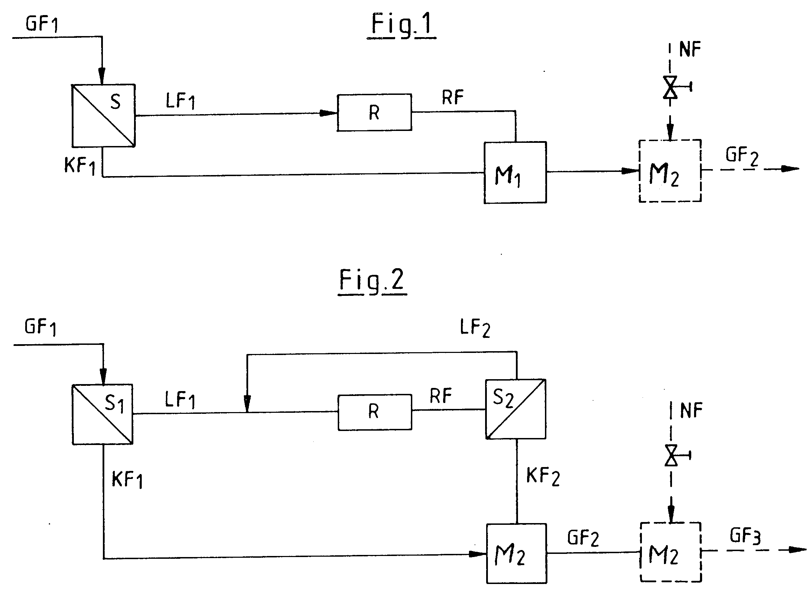

Bevorzugte Ausführungsformen sind in den Figuren 1 bis 5 dargestellt.

Bei der Fraktionierung hat es sich als vorteilhaft erwiesen, diese bei einer Zulaufdichte < 3,0 % und mit einem perforierten Siebkorb in der Fraktioniermaschine von 0,8 - 1,2 mm ⌀ und einer Langfaserabzugsmenge > 30 % der trocken gedachten Zulaufmenge durchzuführen.

Anstelle der perforierten Siebkörbe können auch solche mit Schlitze eingesetzt werden, wobei die Schlitzweite zwischen 0,15 und 0,45 mm liegen werden. Die der Rotorseite zugewandten Siebflächen können auch profiliert sein.

Durch den Fraktioniervorgang wird erfahrungsgemäß die Stoffdichte der Langfaserfraktion erhöht, so daß die Mahlbehandlung in einem Stoffdichtebereich von 3,5 bis 5,5 % erfolgen kann.

Fraktionierung und Mahlung haben so zu erfolgen, daß die gewünschte Verschiebung der Faserfraktionen und des Mahlgrades erreicht wird.

Als ein Sonderfall wäre die Ausführung der Gesamtstoff-Mahlung mit anschließender Fraktionierung in eine Langfaser- und eine Kurzfaserfraktion zu betrachten. Diese Vorgehensweise würde insbesondere dann bevorzugt werden, wenn durch die Fraktionierung des Gesamtstoffes nicht die notwendige Qualität des Kurzfaserstoffes erreichbar ist.

Die Qualität des Kurzfaserstoffes ist gekennzeichnet durch:
a) die notwendige Menge an Feinstoff
b) der Feinstoff muß weitgehend aus Schleimstoff bestehen.

Es ist zu bedenken, daß bei der Herstellung von hochwertigen Druckpapieren der Holzstoff sehr hoch gemahlen ist, also viel Energie aufgenommen hat, was zur Bildung von Schleimstoff ("energiereicher Feinstoff") führte. Zeitungspapiere dagegen, wie sie mit dem Deinkingstoff eingetragen werden, weisen in der Regel nicht immer diese Qualität dieses Feinstoffes auf. Eine Nachmahlung der Kurzfaserkomponente nach der Fraktionierung ist aber technisch nur sehr schwer durchführbar, da die Stoffdichte nach Fraktionierung sehr gering ist und eine aufwendige Eindickung für die Mahlung erforderlich wäre.

Dieser "energiereiche" Feinstoff ist meßtechnisch nachweisbar durch die Bestimmung des Wasserrückhaltevermögens der Fraktion R 100 + R 200 + D 200.

**Tabelle II**

| | WRV % | Aschegehalt % | WRV aschefrei % |
|---|---|---|---|
| aus Zeitungsdruckpapier: R 100 + R 200 + D 200 | 102 | 8,4 | 111 |
| aus Magazinpapier: R 100 + R 200 + D 200 | 100 | 19,6 | 124 |

Ziel der Mahlung und der Fraktionierung ist folglich, aus dem DIP einen Stoff zu erzeugen, der dem ursprünglichem AP-freiem Stoff im Mahlgrad, in den Einzelfraktionen und der Qualität der Fraktionen weitgehend entspricht.

Die Erfindung ist anhand der Zeichnung näher erläutert. Darin ist im übrigen folgendes dargestellt:
- Fig. 1:: Fließschema zum Fraktionsrefinen mit einfacher Mahlung.
- Fig. 2:: Fließschema zum Fraktionsrefinen mit Umlaufmahlung.
- Fig. 3:: Fließschema zum Fraktionsrefinen mit Umlaufmahlung nach vorheriger Aufteilung der Fasersuspension.
- Fig. 4:: Fließschema zum Fraktionsrefinen mit zweifach gestaffelter Umlaufmahlung.
- Fig. 5:: Fließschema zum Fraktionsrefinen mit Umlaufmahlung und diversen Beipaßmöglichkeiten.

Fig. 1 zeigt ein Fließschema zum Fraktionsrefinen eines deinkten Altpapierstoffes. Es wird von links vorbehandelter deinkter Altpapierstoff, bezeichnet als Gesamtfraktion GF1 zu einem Sichter S zugeführt. Die Fasersuspension wird im Sichter S in einer Langfaserfraktion LF1 und einer Kurzfaserfraktion KF1 aufgespalten. Die Langfaserfraktion LF1 durchläuft einen Mahlprozeß hier beispielhaft durch einen Refiner dargestellt, in dem die Faserlängenverteilung der Langfaserfraktion im gewünschten Maße beeinflußt wird. Die erhaltene Faserfraktion RF wird danach in einem Mischer M1 mit der Kurzfaserfraktion KF1 zusammengeführt und steht dem Papierbildungsprozeß zur Verfügung. Beispielsweise ist natürlich auch möglich bei bestimmten Betriebszuständen eine neue Fraktion NF der Gesamtfaserfraktion GF2 zuzuführen und in einem Mischen M2 zu mischen und das daraus entstandene Gemisch GF3 dem Papierbildungsprozeß zuzuführen.

Fig. 2 zeigt eine mögliche Ergänzung zum Prozeß aus Fig. 1. Es ist wiederum eine Fraktion GF1 dargestellt, die über einen Sichter S1 geleitet wird und in einer Kurzfaserfraktion KF1 und einer Langfaserfraktion LF1 aufgeteilt wird. Die Langfaserfraktion 1 wird einem Refiner R zugeführt und nach dem Refinen als Faserfraktion RF wiederum einem Sichtprozeß in einem Sichter S2 zugeführt, wobei die ausgesichtete Langfaserfraktion LF2 wiederum in den Mahlkreislauf zurückgeführt wird während die Kurzfaserfraktion KF2 mit der Kurzfaserfraktion KF1 gemischt wird und dem Papierbildungsprozeß als Gesamtfaserfraktion GF2 zugeführt wird. Ebenso wie in Fig. 1 ist natürlich auch hier eine Zumischung einer Neufaserfraktion NF möglich.

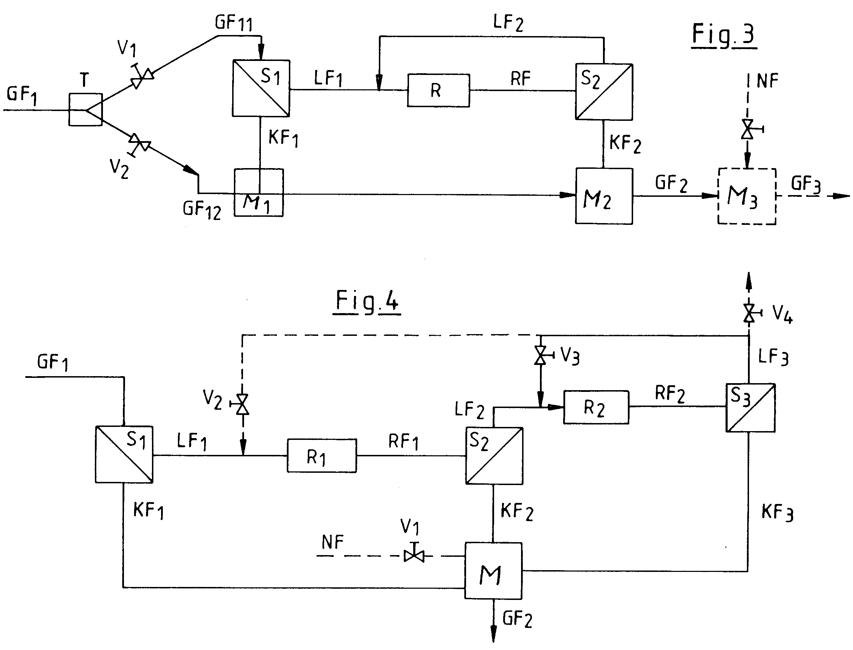

Fig. 3 zeigt einen Prozeß entsprechend Fig. 1 jedoch mit dem Unterschied, daß in der Zuführleitung zum ersten Sichter ein über die Ventile V1 und V2 regelbarer Teiler T eingebaut ist, der den Stoffstrom GF1 in einen Stoffstrom GF11 und einem Stoffstrom GF12 aufteilt, wobei der Stoffstrom GF12 im Beipaß an dem in Fig. 2 beschriebenen Mahlsichtprozeß vorbeigeführt wird.

Fig. 4 zeigt wiederum einen Mahlsichtprozeß der Gesamtfaserfraktion GF1 ähnlich Fig. 2, jedoch wird hierbei nach dem Durchlauf des ersten Mahlprozesses im Refiner R1 ein zweiter Sichtprozeß durchgeführt, der die Fraktion RF1, die aus dem Refiner R1 kommt, aufspaltet in einer Langfaserfraktion LF2 und einer Kurzfaserfraktion KF2. Die Langfaserfraktion LF2 wird einem zweiten Refiner R2 zugeführt und als gemahlene Fraktion RF2 über eine dritte Sichtstufe S3 nochmals aufgeteilt in eine Langfaserfraktion LF3 und einer Kurzfaserfraktion KF3. Die entstandenen Kurzfaserfraktionen KF1, KF2 und KF3 werden ggf. mit einer Zumischung einer Neufaserfraktion NF in einem Mischer zur Gesamtfaserfraktion GF2 zusammengeführt und stehen dem Papierbildungsprozeß zur Verfügung. Die entstandene Langfaserfraktion LF3 nach dem Sichter S3 kann wahlweise wieder dem Mahlprozeß des Refiners R2 oder des Refiners R1 zugeführt werden bzw. besteht auch die Möglichkeit diese Fraktion ganz oder auch teilweise einem anderen Papierbildungsprozeß z.B. für geringerwertiges Zeitungspapier zuzuführen.

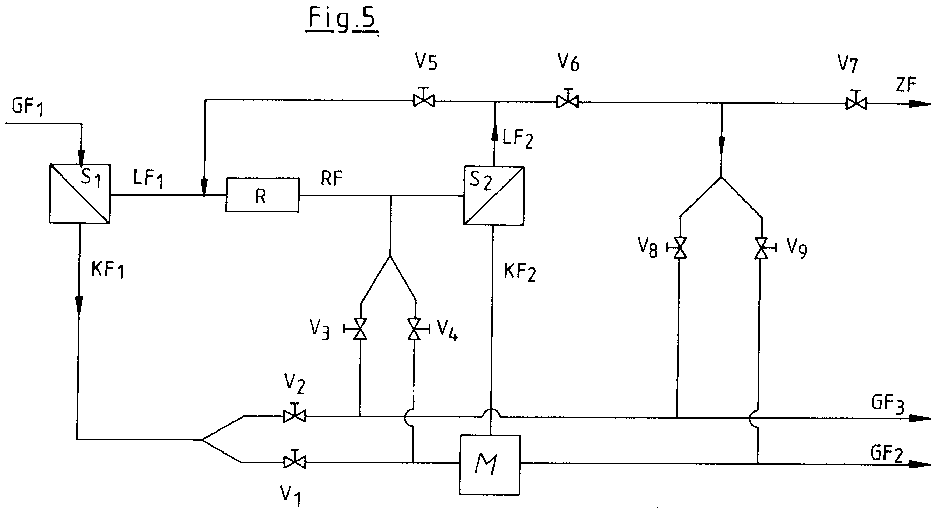

Fig. 5 schließlich zeigt eine Ausführungsform eines Mahlsichtprozesses wie in Fig. 2 beschrieben, jedoch besteht hierdurch die Möglichkeit der unterschiedlichen Führung der Suspensionsströme nahezu beliebige Faserlängenverteilung der Gesamtfaserströme herzustellen. Es wird von linkskommend eine Gesamtfaserfraktion GF1 auf einen Sichter S1 geführt und dort in eine Kurfaserfraktion KF1 und eine Langfaserfraktion LF1 aufgespalten. Die Langfaserfraktion LF1 wird einem Mahlprozeß in einem Refiner R zugeführt und danach als gemahlene Fraktion RF entweder wieder direkt einem Sichtprozeß über einen Sichter S2 zugeführt oder ganz oder teilweise dem vorher aufgespaltenen Kurzfaserfraktion KF1 in der gewünschten Aufteilung zugeführt. Ebenso kann die Langfaserfraktion die LF2, die nach dem Sichtprozeß des Sichters S2 entsteht über Ventile gesteuert ganz oder teilweise in den Sichtkreis in den Mahlkreislauf wieder zurückgeführt werden oder den Gesamtfraktionen GF2, GF3 oder einer minderwertigeren Zeitungsfraktion zugeführt werden. Es versteht sich von selbst, daß bei einem derartigen Fließschema eine entsprechende Mikroprozesor gesteuerte Regelung vorhanden sein muß, die ihre benötigten Informationen aus Online-Durchflußmengenmessern und Online gemessenen Faserlängenverteilungsprofilen der diversen Flußströme erhält.

## Patentansprüche

1. Verfahren zur Herstellung von Papiergrundstoff für hochwertige Druckpapiere aus deinktem Altpapierstoff, wobei das Altpapier zunächst aufgelöst, gereinigt, flotiert und gebleicht wird und die Fasern des so gewonnenen deinkten Altpapierstoffes durch geeignete Mittel zerkleinert werden, so daß sich die Faserlängenverteilung derjenigen eines neu hergestellten Papierstoffes angleicht.

2. Verfahren nach Verfahrensanspruch 1, dadurch gekennzeichnet, daß der gesamte deinkte Altpapierstoff einen Mahlprozeß durchläuft, der die gewünschte Faserlängenverteilung derart beeinflußt, daß sie der Faserlängenverteilung eines neu hergestellten Papierstoffes entspricht.

3. Verfahren zur Herstellung von Papiergrundstoff für hochwertige Druckpapiere aus deinktem Altpapierstoff, wobei das Altpapier zunächst aufgelöst, gereinigt, flotiert und gebleicht wird und der so gewonnene deinkte Altpapierstoff im ersten Schritt durch geeignete Mittel in mindestens zwei Faserfraktionen aufgeteilt wird, die sich durch die mittlere Länge ihrer Fasern unterscheiden; danach wird mindestens eine der Faserfraktionen durch geeignete Mittel derart behandelt, daß sich die mittlere Länge der Fasern dieser Fraktion signifikant reduziert; nachfolgend werden mindestens zwei Faserfraktionen wieder zusammengeführt, so daß eine Suspension mit einer Faserlängenverteilung gebildet ist, die der eines neu hergestellten Papierstoffes entspricht.

4. Verfahren nach Anspruch 1 bis 3, dadurch gekennzeichnet, daß als geeignetes Mittel zur Faserlängenreduktion ein Refiner eingesetzt wird und ggf. die Faserlängenverteilung durch Drehzahlregelung oder Auswahl der Garnituren beinflußt wird.

5. Verfahren nach Anspruch 1 bis 4, dadurch gekennzeichnet, daß der ersten Zerkleinerungsstufe der Faser nachfolgend eine weitere Trennung stattfindet und die langfaserige Fraktion wieder zurück in die Mühle geführt wird oder einem weiteren Zerkleinerungsprozeß zugeführt wird, wobei ggf. die Faserlängenverteilung durch Einstellung der Trenngröße und der Mahlgrad beeinflußt wird.

6. Verfahren nach Anspruch 1 bis 5, dadurch gekennzeichnet, daß die gewonnene Fasersuspension einzige Faserstoffkomponente zur Herstellung von hochwertigen superkalandrierten Druckpapieren Verwendung bildet.

7. Verfahren nach Anspruch 1 bis 6, dadurch gekennzeichnet, daß die gewonnene Fasersuspension neu hergestellter Stoffsuspension zur Herstellung von hochwertigen Druckpapieren hinzugefügt wird.

8. Verfahren nach Anspruch 1 bis 7, dadurch gekennzeichnet, daß dem Mahlprozeß ein Teil seines Stoffdurchsatzes an geeigneter Stelle entzogen wird, so daß die gewonnene Fasersuspension in ihrer Faserlängenverteilung der gewünschten Faserlängenverteilung einer neu hergestellten Stoffsuspension zur Herstellung von hochwertigen Druckpapieren möglichst nahe kommt.

9. Verfahren nach Anspruch 1 bis 8, dadurch gekennzeichnet, daß mit Hilfe von "on line"-Messungen der Fasergrößenverteilung und unter Ausnutzung der Regelgrößen eines Mahl-Sichtkreislaufes der Mahl-Sichtprozeß derart eingestellt wird, daß sich nach Zusammenführen der Einzelsuspensionen die gewünschte Fasergrößenverteilung einstellt.

10. Maschinensatz zur Beeinflußung der der Fasergrößenverteilung einer deinkten Altpapier-Stoffsuspension zur Durchführung des Verfahrensanspruches 1 bestehend aus einem Maschinenuntersatz zur Gewinnung von deinktem Altpapierstoff bestehend aus Mitteln zum Auflösen, Reinigen, Flotieren, Dispergieren und Bleichen des Altpapieres; einer geeigneten Zerkleinerungsvorrichtung die mindestens einen Teil der Fasern des langfaserigen Anteils mechanisch, chemisch oder enzymatisch zerkleinert, und einer Einrichtung, die die behandelte Stoffsuspension an den Stoffauflauf einer Papiermaschine weiterleitet.

11. Maschinensatz zur Beeinflußung der der Fasergrößenverteilung einer deinkten Altpapier-Stoffsuspension zur Durchführung des Verfahrensanspruches 3 bestehend aus einem Maschinenuntersatz zur Gewinnung von deinktem Altpapierstoff bestehend aus Mitteln zum Auflösen, Reinigen, Flotieren und Bleichen des Altpapieres; und einer nachfolgenden Trenneinrichtung, die die einlaufende, deinkte Stoffsuspension in einen langfaserigen Anteil und einen kurzfaserigen Anteil aufspaltet, einer geeigneten Zerkleinerungsvorrichtung die mindestens einen Teil der Fasern des langfaserigen Anteils zerkleinert, und einer Einrichtung, die die Faserströme des kurzfaserigen und des behandelten langfaserigen Anteils zusammenführt und an den Stoffauflauf einer Papiermaschine weiterleitet.

12. Maschinensatz nach Anspruch 11, dadurch gekennzeichnet, daß zwischen der Zerkleinerungsvorrichtung und dem Mischer mindestens eine Trenneinrichtung vorgesehen ist, die die kurzfaserigen Anteile zum Mischer führt und die langfaserigen Anteile in die Zerkleinerungsvorrichtung zurückführt und so mindestens einen Mahl- Sichtkreislauf erzeugt.
